# EUROPEAN PATENT APPLICATION

(11) **EP 3 467 493 A1**
(43) Date of publication of application: **10.04.2019**
(21) Application number: 16903928.6
(22) Date of filing: 30.05.2016
(51) Int. Cl.: G01N 30/86, G01N 30/72

(54) **CHROMATOGRAPH DEVICE**

(71) Applicant: Shimadzu Corporation, Kyoto 604-8511 (JP)
(72) Inventor: IKEDA, Atsushige, Kyoto-shi Kyoto 604-8511 (JP); HIRAIZUMI, Haruna, Kyoto-shi Kyoto 604-8511 (JP); OSHIRO, Mana, Kyoto-shi Kyoto 604-8511 (JP)
(74) Representative: Mewburn Ellis LLP
(86) International application number: PCT/JP2016/065907
(87) International publication number: WO 2017/208300

(57) **Abstract**

Before measurement, as a measurement end condition through an input unit (5), an analyst selects a chromatogram (chromatogram at a specific wavelength or across the entire wavelength) of a peak detection target and specifies a determination value for the number of peaks. During execution of measurement by a measurement unit (1), a chromatogram production unit (22) produces a chromatogram substantially in real time based on collected data, and a peak detection unit (23) detects a peak on the chromatogram. A measurement end condition determining unit (24) counts the number of detected peaks, and determines that the measurement end condition is satisfied when the counted number has reached the determination value for the number of peaks, and a measurement end timing determination unit (25) instructs an analysis control unit (3) to end the measurement when a predetermined time has elapsed since the determination. Data on a target compound can be reliably collected irrespective of a retention time error by setting the measurement end condition as appropriate in accordance with the number of target compounds in a sample and the like. In addition, redundant data collection can be prevented from continuing after the target compound has been eluted.

## Description

### TECHNICAL FIELD

The present invention relates to a chromatograph such as a liquid chromatograph (LC) or a gas chromatograph (GC). The chromatograph includes a liquid chromatograph mass analyzer (LC-MS) and a gas chromatograph mass analyzer (GC-MS) each using a mass analyzer as a detector.

### BACKGROUND ART

In a liquid chromatograph, liquid sample is injected into eluent which is a mobile phase by an injector, and sent to a column in the flow of the eluent. Then, various compounds contained in the liquid sample are temporally separated while passing through the column, and the various separated compounds are sequentially detected by a detector provided at the exit of the column. A data processing unit configured to receive a detection signal from the detector can produce a chromatogram indicating the relation between an elapsed time since the sample injection and a signal intensity for a compound eluted from the column. In a gas chromatograph, carrier gas is used as a mobile phase, and a sample vaporization chamber normally provided at the entrance of the column is used as an injector. Despite of such configuration differences, the gas chromatograph is basically the same as the liquid chromatograph in that compounds temporally separated through the column are sequentially detected by the detector.

In such a chromatograph, the data processing unit collects detection signals obtained by the detector, in other words, collects chromatogram data forming a chromatogram. The start and end timings of the data collection are normally determined by time. For example, in the liquid chromatograph, the timing of sample injection from the injector is taken as a starting point, in other words, zero in time, and the start and end times of measurement are determined by an analyst in advance. In this manner, the start and end timings of the period in which the data processing unit actually acquires chromatogram data as effective data into a storage unit are determined (refer to Patent Literature 1, for example). When a target compound to be measured or a target compound to be checked whether the target compound is contained in a sample is known in advance, the analyst can set the start and end times of measurement based on a generally known retention time of such a target compound.

However, the retention time varies depending on separation conditions such as the flow rate and flow speed of the mobile phase and the temperature of the column, and thus when the separation conditions are inappropriate, the target compound may be eluted from the column after the measurement end time set by the analyst, and chromatogram data corresponding to the target compound cannot be acquired. In contrast, when elution of the target compound ends at a timing significantly earlier than the measurement end time set by the analyst, meaningless data is collected until the measurement end time. As a result, an unnecessary measurement time is increased, and the storage capacity of the storage unit is wasted due to acquisition of the meaningless data into the storage unit.

### CITATION LIST

### PATENT LITERATURE

Patent Literature 1: JP 2014-89092 A (paragraph [0005])

### SUMMARY OF INVENTION

### TECHNICAL PROBLEM

The present invention is intended to solve the above-described problem by providing a chromatograph that can prevent failure of acquisition of data corresponding to a target compound when collecting chromatogram data while reducing the waste time as much as possible in which unnecessary data other than the data corresponding to the target compound is collected, thereby achieving increased measurement efficiency.

### SOLUTION TO PROBLEM

To solve the above-described problem, a chromatograph according to a first aspect of the present invention includes a column for temporally separating compounds contained in a sample, a mobile phase supplying unit configured to supply a mobile phase to the column, a sample introducing unit configured to introduce the sample into the mobile phase supplied to the column by the mobile phase supplying unit, and a detection unit configured to detect the compounds in the sample eluted from the column. The chromatograph further includes:
a) a chromatogram production unit configured to produce a chromatogram substantially in real time based on a detection signal obtained by the detection unit while a measurement is executed;
b) a peak detection unit configured to detect a peak under a predetermined condition on the chromatogram produced by the chromatogram production unit; and
c) a measurement end condition determining unit configured to count the number of peaks detected by the peak detection unit and determine that a measurement end condition is satisfied when the counted number becomes equal to a predetermined value.

To solve the above-described problem, a chromatograph according to a second aspect of the present invention includes a column for temporally separating compounds contained in a sample, a mobile phase supplying unit configured to supply a mobile phase to the column, a sample introducing unit configured to introduce the sample into the mobile phase supplied to the column by the mobile phase supplying unit, and a detection unit configured to detect the compounds in the sample eluted from the column and perform detection across a predetermined wavelength range or across a predetermined mass-charge ratio range. The chromatograph further includes:
a) a spectrum production unit configured to produce a spectrum across the predetermined wavelength range or across the predetermined mass-charge ratio range substantially in real time based on a detection signal obtained by the detection unit while a measurement is executed;
b) a spectrum storage unit storing a reference spectrum; and
c) a measurement end condition determining unit configured to determine a similarity between a measured spectrum produced by the spectrum production unit and the reference spectrum stored in the spectrum storage unit and determine whether a measurement end condition is satisfied based on a result of the similarity determination.

The chromatograph according to the present invention is a liquid chromatograph or a gas chromatograph. In the chromatograph according to the first aspect of the present invention, the detection unit is not particularly specified. However, in the chromatograph according to the second aspect of the present invention, the detection unit performs detection across the predetermined wavelength range or across the predetermined mass-charge ratio range. Specifically, the detection unit in the chromatograph according to the second aspect is, for example, a photodiode array (PDA) detector configured to substantially simultaneously perform detection across a predetermined wavelength range, an ultraviolet visible spectrophotometer configured to perform detection across a predetermined wavelength range by short-time wavelength scanning, or a mass analyzer configured to substantially simultaneously perform detection across the predetermined mass-charge ratio range.

In the chromatograph according to the first aspect of the present invention, the chromatogram production unit produces a chromatogram substantially in real time based on a detection signal sequentially obtained from the detection unit while a measurement on the sample is executed. When the detection unit performs detection across the predetermined wavelength range as described above, the chromatogram production unit may produce either one or both of a chromatogram at a specified wavelength and a chromatogram in the entire predetermined wavelength range. When the detection unit performs detection across the mass-charge ratio range, the chromatogram production unit may produce either one or both of a chromatogram at a specified mass-charge ratio and a chromatogram in the entire predetermined mass-charge ratio range. For example, when the detection unit is a mass analyzer, the chromatogram production unit may produce either one or both of a mass chromatogram (extracted ion chromatogram) in the specified mass-charge ratio and a total ion chromatogram.

It is preferable to construct the chromatograph so that an analyst (user) can select, according to the analyst's intention, which one of a chromatogram in a specified wavelength or specified mass-charge ratio and a chromatogram in the entire predetermined wavelength range or entire predetermined mass-charge ratio range is to be used as a target of peak detection by the peak detection unit. It is also preferable so that the analyst can specify the wavelength or a mass-charge ratio when the chromatogram in the specified wavelength or specified mass-charge ratio is used.

The peak detection unit detects a peak under a predetermined condition on the chromatogram produced as described above. The peak detection condition can be appropriately set in advance. It is possible to disregard such a peak, among peaks detected by a typical peak detection method, for example, whose top intensity or width is equal to or smaller than a predetermined threshold values. With this configuration, for example, when there are a large number of small noise peaks, such noise peaks can be excluded from detection target peaks.

The measurement end condition determining unit counts the number of peaks detected by the peak detection unit, and determines that the measurement end condition is satisfied when the counted number becomes equal to a predetermined value. It is preferable that the predetermined value can be specified as one of the measurement conditions in advance by the analyst. Accordingly, it can be determined that the measurement end condition is satisfied when the number of peaks appearing on the chromatogram reaches the predetermined value, that is, when compounds in the number equal to the predetermined value finished eluting from the column. For example, when the number of target compounds contained in the sample is known and no unknown compounds other than the target compounds are contained, it can be determined, by setting the predetermined value to be the number of peaks corresponding to the number of target compounds, that the measurement end condition is satisfied when all target compounds have been eluted from the column even if the eluting time of the peaks may shift.

In the chromatograph according to the second aspect of the present invention, for example, the analyst stores in advance, as the reference spectrum in the spectrum storage unit, a spectrum (light absorption spectrum, mass spectrum) corresponding to each target compound. Alternatively, the analyst may specify an appropriate spectrum from a database containing a large number of spectra, and may store the specified spectrum as the reference spectrum in the spectrum storage unit or simply mark the specified spectrum as the reference spectrum. The spectrum production unit produces a light absorption spectrum across the predetermined wavelength range or a mass spectrum across the predetermined mass-charge ratio range substantially in real time based on detection signals sequentially obtained from the detection unit while a measurement is executed on the sample. Then, the measurement end condition determining unit determines the similarity between the measured spectrum produced by the spectrum production unit and the reference spectrum, and determines that the measurement end condition is satisfied when a similarity calculated in accordance with, for example, a predetermined algorithm is equal to or higher than a predetermined threshold.

Determination of similarity between the measured spectrum and the reference spectrum may be based on comparison in the entire pattern. However, for example, in a case of a mass spectrum, only the values of the mass-charge ratio at peaks having intensities equal to or larger than a predetermined value may be compared, and the similarity is determined to be high when the values of these mass-charge ratio are similar.

In the chromatograph according to the second aspect, the measurement end condition determining unit may determine, only in a specified retention time range, whether the measurement end condition is satisfied based on the determination of the similarity between the measured spectrum and the reference spectrum.

With this configuration, an erroneous determination that a wrong spectrum is determined as the spectrum of the target compound can be avoided. For example, when the sample contains a different compound having a spectrum similar to the spectrum of the target compound, or when a spectrum accidentally has a shape similar to that of the spectrum of the target compound due to overlapping of spectra of a plurality of compounds, an erroneous determination may be made, but that can be avoided if the time when such a wrong spectrum similar to the spectrum of the target compound is generated is separated from the retention time of the target compound to a large extent. As a result, the correctness of determination of the measurement end condition is enhanced.

The chromatograph according to each of the first and second aspects of the present invention preferably further includes a measurement end execution unit configured to generate an instruction to end the measurement when a predetermined time has elapsed after it is determined by the measurement end condition determining unit that the measurement end condition is satisfied.

The predetermined time may be set to be constant or may be freely set by the analyst.

With this configuration, even when it is determined that the measurement end condition is satisfied before a peak corresponding to a target compound on a chromatogram completely ends, it is possible to end the measurement after all pieces of data corresponding to the peak are collected.

### ADVANTAGEOUS EFFECTS OF INVENTION

With a chromatograph according to the present invention, a measurement is prevented from ending before collection of chromatogram data corresponding to a target compound is completed even when an error occurs in a retention time due to various factors, and thus the chromatogram data corresponding to the target compound can be surely collected. Further, in another case, it is possible to end a measurement at an earlier timing after collection of chromatogram data corresponding to all target compounds is completed. Accordingly, an excessive measurement time for collecting unnecessary data is reduced, which leads to an improved measurement efficiency and reduction of unnecessary consumption of the mobile phase. Moreover, the amount of data collected as chromatogram data can be reduced, whereby the capacity of a storage device storing the data can be reduced, and the data processing load on a computer can be minimized.

### BRIEF DESCRIPTION OF DRAWINGS

Fig. 1 is a configuration diagram of a main part of an LC device as a chromatograph according to a first embodiment of the present invention.
Fig. 2 is a pattern diagram for description of characteristic control and processing operation at the LC device according to the first embodiment.
Fig. 3 is a configuration diagram of a main part of an LC device as a chromatograph according to a second embodiment of the present invention.
Fig. 4 is a pattern diagram for description of characteristic control and processing operation at the LC device according to the second embodiment.

### DESCRIPTION OF EMBODIMENTS

### [First embodiment]

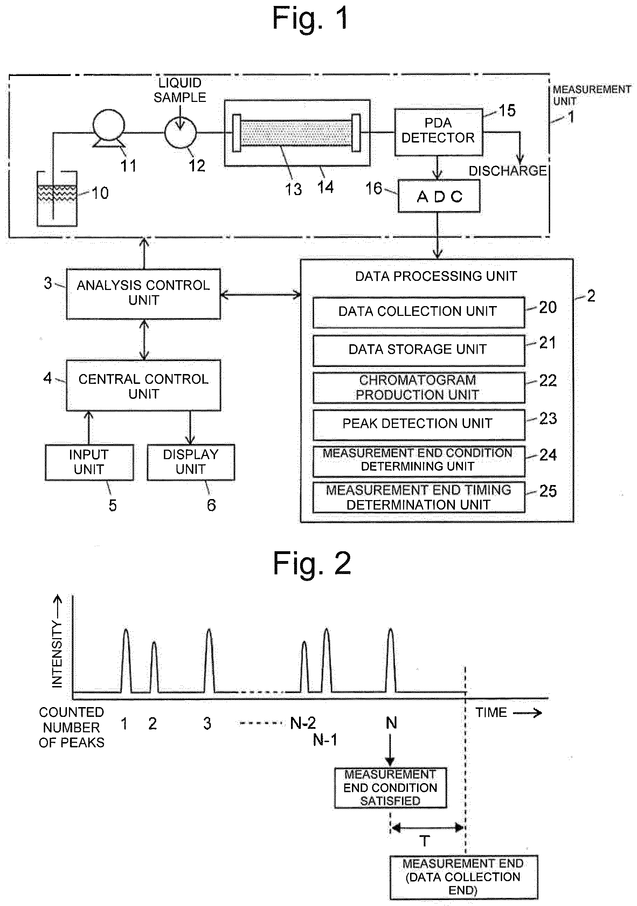

An LC device as a chromatograph according to a first embodiment of the present invention will be described below with the accompanying drawings. Fig. 1 is a configuration diagram of a main part of the LC device according to the first embodiment.

This LC device includes, as a measurement unit 1, a liquid feeding pump 11 configured to suck a mobile phase from a mobile phase container 10 and feed the mobile phase at a constant flow speed, an injector 12 configured to inject a constant amount of liquid sample into the mobile phase, a column 13 through which various compounds in the liquid sample are temporally separated, a column oven 14 configured to adjust the temperature of the column 13, a PDA detector 15 configured to detect a compound in eluent from the exit of the column 13, and an analog-digital converter (ADC) 16 configured to convert a detection signal generated by the PDA detector 15 into digital data. The PDA detector 15 is capable of simultaneously detecting absorbance across a predetermined wavelength range of λa to λb.

A data processing unit 2 includes, as functional blocks, a data collection unit 20 configured to collect chromatogram data and store the collected data in a data storage unit 21, a chromatogram production unit 22 configured to produce a chromatogram substantially in real time based on the collected data, a peak detection unit 23 configured to detect a peak on the produced chromatogram in accordance with a condition set in advance, a measurement end condition determining unit 24 configured to count the number of detected peaks and determine whether a measurement end condition is satisfied based on the counted number, and a measurement end timing determination unit 25 configured to receive a determining signal indicating that the measurement end condition is satisfied and determine a timing at which measurement is ended. The chromatogram production unit 22 is capable of producing a chromatogram in a specified particular wavelength and a chromatogram in the entire predetermined wavelength range of λa to λb.

An analysis control unit 3 controls operation of each component of the measurement unit 1 and operation of the data processing unit 2 to execute measurement. A central control unit 4 performs the entire system control and input and output control, and is connected with an input unit 5 such as a keyboard, and a display unit 6 as a monitor.

The data processing unit 2 and the central control unit 4 (and part of the analysis control unit 3 in some cases) may be achieved by a personal computer as a hardware resource and each have functionality thereof achieved by the computer executing dedicated control and processing software installed on the computer.

The following describes characteristic control and processing operation at the LC device according to the first embodiment with reference to Fig. 2. Fig. 2 is a pattern diagram for the description.

Before measurement, an analyst specifies, as one measurement condition, a measurement start time and a measurement end condition through the input unit 5. Similarly to conventional cases, the measurement start time is, for example, an elapsed time at which data collection starts when time at injection of liquid sample from the injector 12 is taken to be zero. Thus, for example, when the measurement start time is specified as zero, collection of chromatogram data is started at the timing when the liquid sample is injected into a mobile phase from the injector 12. The measurement end condition includes selection of which one of a chromatogram at a particular wavelength (hereinafter referred to as a "wavelength chromatogram") and a chromatogram in the entire measurement wavelength range (hereinafter referred to as a "total wavelength chromatogram") is used as a chromatogram from which a peak is to be detected, and also includes a wavelength value λx of the wavelength chromatogram and a determination value N of the number of peaks when the wavelength chromatogram is used.

Under control of the analysis control unit 3, the liquid feeding pump 11 feeds the mobile phase to the column 13 at a constant flow speed. The liquid sample is injected into the mobile phase from the injector 12 at a predetermined timing and fed into the column 13 in the flow of the mobile phase. The PDA detector 15 repeatedly performs simultaneous detection of an intensity signal across a predetermined wavelength range at a predetermined time interval. Thus, when a compound contained in the liquid sample starts being eluted from the exit of the column 13, the PDA detector 15 starts outputting a detection signal reflecting a light absorption spectrum in accordance with the light absorption characteristic of the compound. The data collection unit 20 of the data processing unit 2 starts storing, in the data storage unit 21, data transferred from the ADC 16 when the specified measurement start time is reached.

Simultaneously with start of the data storage in the data storage unit 21, the chromatogram production unit 22 starts producing a chromatogram substantially in real time based on the collected data. The produced chromatogram is at least a chromatogram selected as the measurement end condition, in other words, either one or both of the wavelength chromatogram at the specific wavelength λx and the total wavelength chromatogram. The peak detection unit 23 detects, based on a predetermined peak detection condition, a peak on a chromatogram produced for use in peak detection. The peak detection condition may include conditions for determining a peak start point, a peak end point, and a peak top position, and additionally include, for example, a lower limit allowable value of peak intensity, and a lower limit allowable value of a peak width so that a noise peak due to disturbance such as electromagnetic noise is not recognized as a peak.

When the total wavelength chromatogram is used, a peak appears on the chromatogram each time a compound temporally separated through the column 13 is eluted from the exit of the column 13. Thus, when the sample contains a large number of compounds, a large number of peaks sequentially appear on the chromatogram as illustrated in Fig. 2. The measurement end condition determining unit 24 counts the number of peaks detected on the chromatogram by the peak detection unit 23. Then, it is determined whether the counted number of peaks has reached the determination value N for the number of peaks, which is set as one measurement end condition.

When the counted number of peaks has reached the determination value N for the number of peaks, the measurement end condition determining unit 24 determines that the measurement end condition is satisfied. The measurement end timing determination unit 25 transmits a measurement end instruction to the analysis control unit 3 when a predetermined time T has elapsed after the determination result that the measurement end condition is satisfied is received. Having received the instruction, the analysis control unit 3 ends measurement, and the data collection unit 20 stops data storage in the data storage unit 21. The predetermined time T may be a constant time determined inside the device, or may be freely set as one measurement end condition by the analyst. In any case, the time T does not need to be long, but the time T approximately equal to a time between the start point and end point of one peak suffices.

When the absorption wavelength of a target compound is known and the wavelength chromatogram is used for peak detection, only one peak appears on the wavelength chromatogram unless the sample contains another compound having an identical (overlapping) absorption wavelength. In such a case, the determination value N for the number of peaks is set to be one, and the measurement end condition determining unit 24 determines that the measurement end condition is satisfied when a peak attributable to the target compound appears. Accordingly, the measurement may be ended right after the target compound has been eluted from the column 13.

Although the LC device according to the first embodiment includes the PDA detector 15, an LC-MS device in which the PDA detector 15 is replaced with a mass analyzer can perform processing and control same as those in the first embodiment. In this case, the mass analyzer repeatedly performs scanning measurement in a predetermined mass-charge ratio range so that the data collection unit 20 can collect mass spectrum data across the predetermined mass-charge ratio range. Thus, basic processing and control are completely same when the wavelength chromatogram is replaced with a mass chromatogram (extracted ion chromatogram), and the total wavelength chromatogram is replaced with a total ion chromatogram (TIC) in the above description of the first embodiment.

### [Second embodiment]

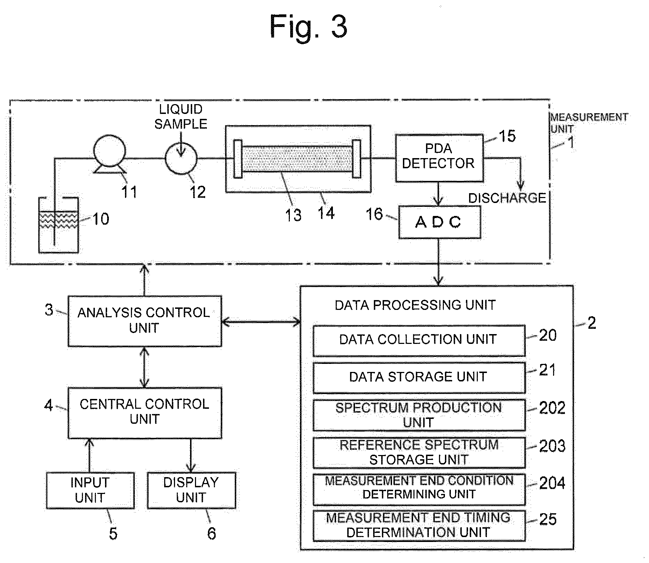

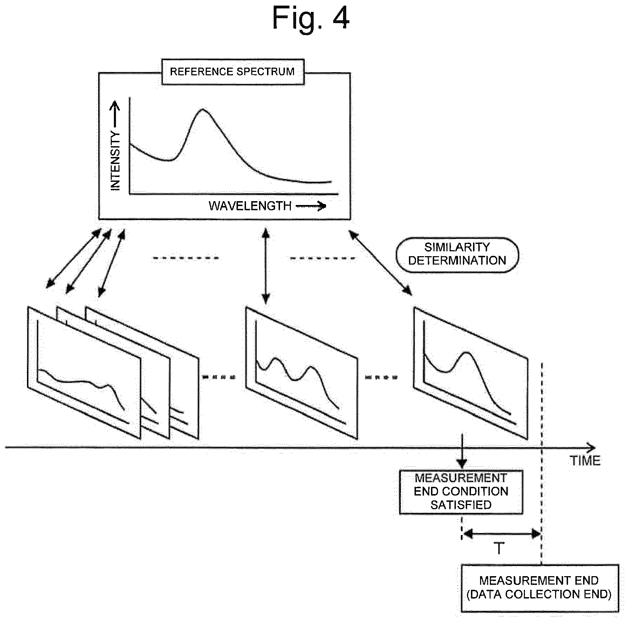

The following describes an LC device as a chromatograph according to a second embodiment of the present invention with reference to Figs. 3 and 4. Fig. 3 is a configuration diagram of a main part of the LC device according to the second embodiment, and any component identical to that in Fig. 1 is denoted by an identical reference sign. Fig. 4 is a pattern diagram for description of characteristic control and processing operation at the LC device according to the second embodiment.

In the LC device according to the second embodiment illustrated in Fig. 3, the measurement unit 1 has a configuration completely same as that in the first embodiment. The second embodiment is different from the first embodiment in that the data processing unit 2 includes a spectrum production unit 202, a reference spectrum storage unit 203, and a measurement end condition determining unit 204 configured to execute processing different from that of the measurement end condition determining unit 24. The following describes processing and control at the LC device according to the second embodiment with focus on differences from those at the LC device according to the first embodiment.

Before measurement, the analyst specifies, as one measurement condition, a measurement start time and a typical light absorption spectrum of a target compound through the input unit 5. In practical use, typical light absorption spectra corresponding to various compounds are preferably stored as a database in advance so that the typical light absorption spectrum corresponding to the compound specified by the analyst is read from the database. The light absorption spectrum of the specified target compound is stored as a reference spectrum in the reference spectrum storage unit 203.

When the liquid sample is injected into the mobile phase from the injector 12 and the specified measurement start time is reached, the data collection unit 20 of the data processing unit 2 starts storing, in the data storage unit 21, data transferred from the ADC 16. Simultaneously with start of the data storage in the data storage unit 21, the spectrum production unit 202 starts producing a light absorption spectrum in a predetermined wavelength range based on the collected data. As illustrated in Fig. 4, the spectrum production unit 202 repeatedly produces a light absorption spectrum substantially in real time based on newly collected data.

When a compound temporally separated through the column 13 is eluted from the exit of the column 13, change occurs to the light absorption spectrum as a light absorption peak due to the compound appears. The measurement end condition determining unit 204 calculates the similarity in pattern between each measured light absorption spectrum sequentially produced by the spectrum production unit 202 as described above and the reference spectrum stored in the reference spectrum storage unit 203. Then, it is determined whether the similarity is equal to or larger than a predetermined threshold. When the similarity is equal to or larger than the predetermined threshold, it is determined that the spectrum patterns has high similarity and the measured light absorption spectrum corresponds to the target compound. In this case, the measurement end condition determining unit 204 determines that the measurement end condition is satisfied.

The measurement end timing determination unit 25 transmits a measurement end instruction to the analysis control unit 3 when a predetermined time T has elapsed after the determination result that the measurement end condition is satisfied is received. Having received the instruction, the analysis control unit 3 ends measurement, and the data collection unit 20 stops data storage in the data storage unit 21.

In this manner, in the LC device according to the second embodiment, measurement can be ended when it can be estimated at a high certainty that the target compound specified by the analyst has been eluted from the exit of the column 13.

However, a light absorption spectrum has a peak broader than that of a mass spectrum, which potentially leads to false determination that the light absorption spectra of different compounds have a high pattern similarity therebetween. Thus, information on a retention time is preferably used in addition to the spectrum pattern similarity, thereby increasing the correctness of estimation as a target compound.

Specifically, before measurement, the analyst specifies, as one measurement condition, the light absorption spectrum of a target compound and information on a retention time range (time range centered at a typical retention time with a maximum retention time error taken into account) through the input unit 5. In practical use, typical light absorption spectra corresponding to various compounds and retention time ranges are preferably stored as a database in advance so that the typical light absorption spectrum and the retention time range corresponding to a compound specified by the analyst are read from the database. The light absorption spectrum and the retention time range of the specified target compound are stored in the reference spectrum storage unit 203.

Then, in measurement execution, the measurement end condition determining unit 204 determines the spectrum pattern similarity between measured light absorption spectrum and a reference spectrum only in the specified retention time range, not from measurement start timing, in other words, data collection start timing, and determines whether the measurement end condition is satisfied. In this case, when a light absorption spectrum having a spectrum pattern similar to the light absorption spectrum of the target compound is observed in a time range other than the retention time range, the spectrum is ignored and it is not determined that the measurement end condition is satisfied. In this manner, false determination that the measurement end condition is satisfied can be avoided.

Similarly to the first embodiment, in the LC device according to the second embodiment, the PDA detector 15 may be replaced with a mass analyzer. Specifically, in the LC-MS device, the mass analyzer repeatedly performs scanning measurement in a predetermined mass-charge ratio range, and the data collection unit 20 collects mass spectrum data across a predetermined mass-charge ratio range. The spectrum production unit 202 produces a mass spectrum based on the data, and the measurement end condition determining unit 204 determines whether the measurement end condition is satisfied based on the spectrum pattern similarity between a mass spectrum stored in the reference spectrum storage unit 203 and corresponding to a target compound and a measured mass spectrum. In this manner, basic and processing control are completely same as those of the first embodiment.

A mass spectrum has a peak width significantly narrower than that of a light absorption spectrum, and thus the similarity may be determined by comparing only the mass-charge ratio values at each peak instead of comparing the spectrum patterns. In other words, the similarity between mass spectra may be determined based on only the number (ratio) of peaks at which the mass-charge ratio values are equivalent irrespective of peak intensities. The accuracy of the determination can be improved by using peak intensities.

In the above description, it is determined that the measurement end condition is satisfied when a light absorption spectrum or mass spectrum similar to a typical light absorption spectrum or mass spectrum corresponding to one target compound is observed, but the present invention is also applicable to a plurality of target compounds. Specifically, it may be determined that the measurement end condition is satisfied when all light absorption spectra or mass spectra similar to typical light absorption spectra or mass spectra corresponding to a plurality of target compounds specified in advance are observed.

The above-described embodiments are merely examples of the present invention, and appropriate modifications, corrections, and additions may be made within the scope of the present invention. For example, the above-described embodiments are examples in which the present invention is applied to an LC device including an LC-MS device, but the present invention is also applicable to a GC device including a GC-MS device.

### REFERENCE SIGNS LIST

1... Measurement Unit
10... Mobile Phase Container
11... Liquid Feeding Pump
12... Injector
13... Column
14... Column Oven
15... Photodiode Array (PDA) Detector
16... Analog-digital Converter (ADC)
2... Data Processing Unit
20... Data Collection Unit
21... Data Storage Unit
22... Chromatogram Production Unit
23... Peak Detection Unit
24, 204... Measurement End Condition Determining Unit
25... Measurement End Timing Determination Unit
202... Spectrum Production Unit
203... Reference Spectrum Storage Unit
3... Analysis Control Unit
4... Central Control Unit
5... Input Unit
6... Display Unit

## Claims

1. A chromatograph including a column for temporally separating compounds contained in a sample, a mobile phase supplying unit configured to supply a mobile phase to the column, a sample introducing unit configured to introduce the sample into the mobile phase supplied to the column by the mobile phase supplying unit, and a detection unit configured to detect the compounds in the sample eluted from the column, the chromatograph comprising:
a) a chromatogram production unit configured to produce a chromatogram substantially in real time based on a detection signal obtained by the detection unit while a measurement is executed;
b) a peak detection unit configured to detect a peak under a predetermined condition on the chromatogram produced by the chromatogram production unit; and
c) a measurement end condition determining unit configured to count a number of peaks detected by the peak detection unit and determine that a measurement end condition is satisfied when the counted number becomes equal to a predetermined value.

2. The chromatograph according to claim 1, wherein
the detection unit performs detection across a predetermined wavelength range, and
the chromatogram production unit produces either one or both of a chromatogram in a specified wavelength and a chromatogram in the entire predetermined wavelength range.

3. The chromatograph according to claim 1, wherein
the detection unit performs detection across a predetermined mass-charge ratio range, and
the chromatogram production unit produces either one or both of a chromatogram in a specified mass-charge ratio and a chromatogram in the entire predetermined mass-charge ratio range.

4. The chromatograph according to any one of claims 1 to 3, further comprising a measurement end execution unit configured to perform instruction to end measurement when a predetermined time has elapsed after it is determined by the measurement end condition determining unit that the measurement end condition is satisfied.

5. A chromatograph including a column for temporally separating compounds contained in a sample, a mobile phase supplying unit configured to supply a mobile phase to the column, a sample introducing unit configured to introduce the sample into the mobile phase supplied to the column by the mobile phase supplying unit, and a detection unit configured to detect the compounds in the sample eluted from the column and perform detection across a predetermined wavelength range or across a predetermined mass-charge ratio range, the chromatograph comprising:
a) a spectrum production unit configured to produce a spectrum across the predetermined wavelength range or across the predetermined mass-charge ratio range substantially in real time based on a detection signal obtained by the detection unit while a measurement is executed;
b) a spectrum storage unit storing a reference spectrum; and
c) a measurement end condition determining unit configured to determine a similarity between a measured spectrum produced by the spectrum production unit and the reference spectrum stored in the spectrum storage unit and determine whether a measurement end condition is satisfied based on a result of the similarity determination.

6. The chromatograph according to claim 5, wherein the measurement end condition determining unit determines, only in a specified retention time range, whether the measurement end condition is satisfied based on the determination of the similarity between the measured spectrum and the reference spectrum.

7. The chromatograph according to claim 5 or 6, further comprising a measurement end execution unit configured to perform instruction to end measurement when a predetermined time has elapsed after it is determined by the measurement end condition determining unit that the measurement end condition is satisfied.
